# EUROPEAN PATENT SPECIFICATION

(11) **EP 0 544 331 B1**
(45) Date of publication and mention of the grant of the patent: **11.12.1996**
(21) Application number: 92120334.5
(22) Date of filing: 27.11.1992
(51) Int. Cl.: C08L 83/04, C10M 169/04

(54) **Organopolysiloxane composition for viscous fluid couplings**
Organopolysiloxanzusammensetzung für Flüssigkeitsreibungskupplung
Composition d'organopolysiloxane pour accouplements à fluide visqueux

(30) Priority: 28.11.1991 JP 339874/91; 25.12.1991 JP 357009/91
(43) Date of publication of application: 02.06.1993
(73) Proprietor: Dow Corning Toray Silicone Company, Limited, Tokyo 103 (JP)
(72) Inventor: Mitani, Osamu, Research & Developt Dept, Toray Dow, Ichihara-shi, Chiba Prefecture (JP); Murakami,Ichiro Research & Developt Dept, Toray, Ichihara-shi, Chiba Prefecture (JP)
(74) Representative: Spott, Gottfried, Dr.

(56) References cited:
- US-A- 4 680 229
- DATABASE WPIL Derwent Publications Ltd., London, GB; AN 82-13160
- DATABASE WPIL Derwent Publications Ltd., London, GB; AN 77-33932
- DATABASE WPIL Derwent Publications Ltd., London, GB; AN 82-03597 ; & JP-A-57 172 996

## Description

In the past, organopolysiloxane liquids have been used for viscous fluid couplings due to the need for characteristics such as an appropriate viscosity, high flash point, stability with respect to oxidation and thermal decomposition and in addition, a low viscosity variation as a function of temperature.

However, deterioration such as gelation or increase in viscosity occurs with organopolysiloxane liquids used by their self after a determinate period of time due to the heat produced by extreme shear or friction that arises in fluid couplings. Thus there is the disadvantage that their function as fluid couplings is lost.

For this reason, methods have been investigated wherein such occurrences are prevented by the addition of various antioxidants to organopolysiloxane liquids. For example, in Japanese Kokoku Patent No. Sho 55[1980]-18457 and U.S. Patent No. 4,515,702 a dimethyl polysiloxane with a low degree of polymerization that has been modified with an aromatic amine compound is added and blended in with a dimethylpolysiloxane liquid. By this means, a dimethylpolysiloxane composition is obtained that has little increase in viscosity under high-temperature conditions.

However, with all of the dimethylpolysiloxane compositions obtained by these methods, the low-polymer dimethylpolysiloxane modified with the aromatic amine compound undergoes a re-arrangement reaction with the base-oil dimethylpolysiloxane liquid under high-temperature and high-shear conditions, and the viscosity of the dimethylpolysiloxane itself decreases. For this reason, when such substances are used as viscous fluid couplings, there is the disadvantage that torque transmission decreases and the performance of the fluid coupling is lost.

In addition, a complicated process is required for the manufacture of low-polymer dimethylpolysiloxanes modified by aromatic amine compounds, which has the disadvantage of increasing costs.

The objective of the present invention is to offer an organopolysiloxane composition for viscous fluid couplings which can withstand use over long periods of time without decrease or elevation in viscosity under high temperatures and high shear, and wherein there is almost no torque variation.

The present invention concerns an organopolysiloxane composition for viscous fluid couplings comprised of
(A) at least one organopolysiloxane liquid selected from organopolysiloxane liquids having a formula R1ₐR²_{b}SiO_{[4-(a+b)]/2},
   wherein R₁ is an alkyl group selected from methyl, ethyl, propyl, isopropyl and butyl, R₂ is an aryl group selected from phenyl or tolyl, a + b = 1.95 to 2.05 and b/(a + b) = 0.05 to 0.30; and
(B) 0.01 to 5 parts by weight per 100 parts by weight of component (A) of a compound having the general formula: 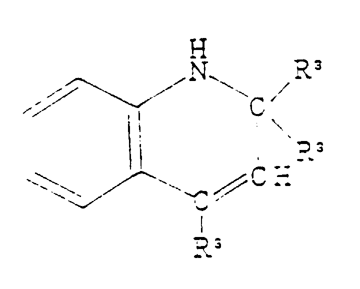 wherein each R₃ is independently selected from methyl, ethyl, propyl, isopropyl, octyl and nonyl.

The organopolysiloxane composition for viscous fluid couplings of the instant invention that is stable over a long period of time, with little decrease or increase in viscosity under high-temperature and high-shear conditions.

The organopolysiloxane of component (A) used in the present invention is the main or base component of the composition of the present invention. It is preferred that R¹ be a methyl group and R² a phenyl group. a + b is a number from 1.95 to 2.05. b/(a + b) denotes the amount of aryl groups with respect to the total amount of organic groups. As this value increases, the temperature viscosity coefficient increases, and viscosity decline at higher temperature eventually becomes so large that the torque transmission is hindered. In addition, as this value decreases, an adequate improvement of heat resistance is not observed, and the dissolving of component (B) also decreases. Thus b/(a + b) should have a value in the range of 0.05 to 0.30, with 0.05 to 0.20 being preferred.

Examples of organopolysiloxanes, (A), useful in the instant invention include, but are not limited to, copolymers of methylphenylsiloxane and dimethylsiloxane, blocked at both ends with trimethylsiloxy groups; copolymers of diphenylsiloxane and dimethylsiloxane, blocked at both ends with trimethylsiloxy groups; copolymers of methylphenylsiloxane and dimethylsiloxane, blocked at both ends with dimethylphenylsiloxy groups and copolymers of diphenylsiloxane and dimethylsiloxane, blocked at both ends with dimethylphenylsiloxy groups.

Although there are no particular limitations on the viscosity of the organopolysiloxanes of the present invention, organopolysiloxanes with viscosities of 100 to 1,000,000 mm²/s at 25°C are preferred from the standpoint of torque transmission. Organopolysiloxanes having a viscosity of 500 to 500,000 mm²/s at 25°C are further preferred.

In the composition of the present invention, component (A) may be used individually, or may be used in mixtures of 2 or more organopolysiloxanes having different viscosities. In addition, mixtures of 2 or more organopolysiloxane having different chemical structures may also be used.

Component (B) used in the present invention is the component that characterizes the present invention, and is a compound having the general formula: 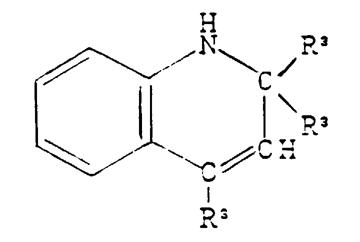 wherein each R3 may be independently selected from methyl, ethyl, propyl, isopropyl, octyl, and nonyl. A typical example of such a component (B) is the homopolymer of 1,2-dihydro-2,2,4-trimethylquinoline (1,2-dihydro-2,2,4-trimethylquinoline homopolymer).

The amount of component (B) added is 0.01 to 5 parts by weight based on 100 parts by weight of the component (A). If the amount blended is less than 0.01 part by weight, the effects desired by the addition of the component will not be observed. If this amount exceeds 5 parts by weight, there is the possibility that the dissolving power with respect to component (A) will deteriorate and it will be difficult to obtain a uniform organopolysiloxane composition.

The composition of the present invention can easily be manufactured by uniformly mixing the specific amounts of component (A) and component (B) while heating. Because component (B) is ordinarily a solid, it is advantageous to carry out the mixing at a temperature above the melting temperature of component (B). Typically the temperature is in the range of 60°C to 130°C, with 90°C to 130°C being preferred. In addition, the composition of the present invention can be manufactured by preliminarily mixing component (B) to homogeneity in part of component (A) and thereafter mixing in the remaining portion of component (A).

So that those skilled in the art can understand and appreciate the invention taught herein, the following examples are presented, being it understood that these examples should not be used to limit the scope of this invention found in the claims attached hereto.

In the examples, the designation "parts" denotes parts by weight and the viscosity is measured at 25°C in centistokes units and converted to mm²/s.

### Example 1

An organopolysiloxane fluid with a viscosity of 4,200 mm²/s was first prepared by mixing 20 parts of a copolymer of diphenylsiloxane and dimethylsiloxane having both ends blocked with trimethylsiloxy groups (viscosity = 130 mm²/s, diphenylsiloxane unit content = 15 mol%) with 80 parts of a copolymer of diphenylsiloxane and dimethylsiloxane having both ends blocked with trimethylsiloxy groups (viscosity = 7,000 mm²/s, diphenylsiloxane unit content = 15 mol%). To 100 parts of the organopolysiloxane was added 0.5 parts of a low polymer of the compound expressed by 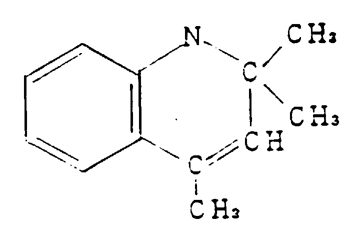 (quinoline, 1,2-dihydro-2,2,4-trimethyl, homopolymer; polymerized 2,2,,4-trimethyl-1,2-dihydroquinoline). This low polymer was reddish brown powder with a softening point of 65°C to 110°C and had a degree of polymerization of 2 to 4). Agitation was carried out for 5 min at 100°C under a nitrogen blanket and the components were mixed uniformly to obtain an organopolysiloxane composition for viscous fluid couplings.

30 g of this organopolysiloxane composition for viscous fluid couplings were collected in a 100-mL beaker. The beaker was placed in a thermal convection oven at 280°C and the change in viscosity was measured (Test 1).

In addition, 80 g of this composition were introduced into a fluid coupling device and the time for gelation of the organopolysiloxane for viscous fluid couplings was measured while carrying out continuous rotation at 3000 rpm at an atmospheric temperature of 280°C (Test 2).

These results are compiled as Test 1 and Test 2 in Table I below. In Table I, the heading "max. visc. decrease" is the percent change in viscosity at the lowest viscosity during the test and the "time decrease" denotes the time at which viscosity was at a minimum. The gelation time indicates the period of time in which flowability is lost due to viscosity increase.

### Example 2

0.5 parts of the quinoline homopolymer used an Example 1 was added to 100 parts of a copolymer of diphenylsiloxane and dimethylsiloxane blocked on both ends with trimethylsiloxy groups and with a viscosity of 10,000 mm²/s (diphenylsiloxane unit content 10 mol%). Agitation and mixing were carried out for 5 min at 100°C in an atmosphere of nitrogen to produce an organopolysiloxane composition for viscous fluid couplings.

Measurements of the characteristics of this composition were carried out in the same manner as in Example 1 and the results are shown in Table I.

### Example 3

0.5 parts of the quinoline homopolymer used an Example 1 was added to 100 parts of a copolymer of diphenylsiloxane and a dimethylsiloxane blocked on both ends with trimethylsiloxy groups and with a viscosity of 10,000 mm²/s (diphenylsiloxane unit content 15 mol%). Agitation and mixing were carried out for 5 min at 100°C in an atmosphere of nitrogen to produce an organopolysiloxane composition for viscous fluid couplings.

Measurements of the characteristics of this composition were carried out in the same manner as in Example 1 and the results are shown in Table I.

### Comparison Example 1

An organopolysiloxane composition for viscous fluid couplings was prepared as in Example 1, except that the quinoline homopolymer was omitted. The properties of this composition were measured as described above in Example 1, and these results are reported below in Table 1 as Sample C1.

**Table I**

| | | TEST 1 | | | TEST 2 |
|---|---|---|---|---|---|
| Sample | Initial Viscosity (mm²/s) | Max. Visc. Decrease (%) | Time Decrease (hr) | Gelation Time (hr) | Gelation Time (hr) |
| 1 | 4,200 | 30 | 46 | 258 | 162 |
| 2 | 10,000 | 34 | 20 | 214 | --- |
| 3 | 10,000 | 23 | 20 | 214 | --- |
| C1 | 4,200 | 32 | 23 | 108 | 30 |

The organopolysiloxane composition for viscous fluid couplings of the present invention is composed of component (A) and a component (B); in particular, it contains a special component (B) and thus is characterized by withstanding use over long periods of time without increase or decrease in viscosity under high-temperature and high-shear conditions and with almost no torque variation.

## Claims

1. An organopolysiloxane composition for viscous fluid couplings comprised of
(A) at least one organopolysiloxane liquid selected from organopolysiloxane liquids having a formula R1ₐR²_{b}SiO_{[4-(a+b)]/2},
wherein R₁ is an alkyl group selected from methyl, ethyl, propyl, isopropyl and butyl, R₂ is an aryl group selected from phenyl or tolyl, a + b = 1.95 to 2.05 and b/(a + b) = 0.05 to 0.30; and
(B) 0.01 to 5 parts by weight per 100 parts by weight of component (A) of a compound having the general formula: 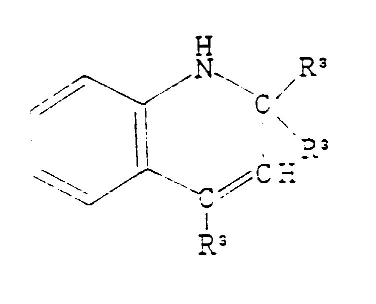 wherein each R₃ is independently selected from methyl, ethyl, propyl, isopropyl, octyl and nonyl.

## Patentansprüche

1. Organopolysiloxanzusammensetzung für viskose Flüssigkeitskupplungen zusammengesetzt aus
(A) mindestens einem Organopolysiloxanöl ausgewählt aus Organopolysiloxanölen mit der Formel R¹ₐR²_{b}SiO_{[4-(a+b)]/2}, worin R¹ eine Alkylgruppe ist, ausgewählt aus Methyl-, Ethyl-, Propyl-, Isopropyl- und Butylgruppen, R² eine Arylgruppe ist ausgewählt aus Phenyl- oder Tolylgruppen, a + b = 1,95 bis 2,05 und b/(a + b) = 0,05 bis 0,30 ist und
(B) 0,01 bis 5 Gewichtsteilen pro 100 Gewichtsteilen Komponente (A) eine Verbindung der allgemeinen Formel: 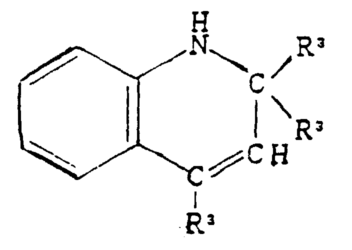 worin jeder Rest R³ unabhängig ausgewählt ist aus Methyl-, Ethyl-, Propyl-, Isopropyl-, Octyl- und Nonylresten.

## Revendications

1. Composition d'organopolysiloxane pour accouplements hydrauliques visqueux, constituée de
(A) au moins un liquide d'organopolysiloxane choisi parmi les liquides d'organopolysiloxane ayant une formule R¹ₐR²_{b}SiO_{[4-(a+b)]/2}, dans laquelle R¹ est un groupe alkyle choisi parmi les groupes méthyle, éthyle, propyle, isopropyle et butyle, R² est un groupe aryle choisi parmi les groupes phényle et tolyle, a+b = 1,95 à 2,05 et b/(a+b) = 0,05 à 0,30 ; et
(B) 0,01 à 5 parties en poids, pour 100 parties en poids de constituant (A), d'un composé ayant la formule générale : 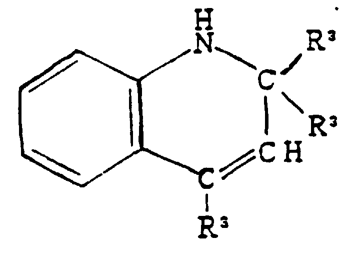 dans laquelle chaque R³ est indépendamment choisi parmi les groupes méthyle, éthyle, propyle, isopropyle, octyle et nonyle.
